# EUROPEAN PATENT APPLICATION

(11) **EP 4 715 032 A1**
(43) Date of publication of application: **25.03.2026**
(21) Application number: 23941296.8
(22) Date of filing: 30.10.2023
(51) Int. Cl.: C11D 3/50, C11D 3/48, C11D 3/37, C11D 3/04, C11D 3/10, C11D 17/02

(54) **FRAGRANCE BEAD AND PREPARATION METHOD THEREFOR**

(30) Priority: 12.06.2023 CN 202310695075
(71) Applicant: Foshan City Magic Crystal Technology Development Co., Ltd., Foshan, Guangdong 528329 (CN)
(72) Inventor: WANG, Fengsheng, Foshan, Guangdong 528329 (CN); WONG, Chiseng, Foshan, Guangdong 528329 (CN); WU, Jiyuan, Foshan, Guangdong 528329 (CN)
(74) Representative: KIPA AB
(86) International application number: PCT/CN2023/127909
(87) International publication number: WO 2024/255072

(57) **Abstract**

Disclosed in the present invention are a fragrance bead and a preparation method therefor, relating to the technical field of detergents. The appearance colors of the fragrance bead have a macaron-like color palette, the saturation of the appearance colors thereof is 0-70%, and the brightness value is 50-100%, which can make the appearance colors exhibit a soft pink visual effect that can better attract consumers.

## Description

### FIELD OF THE DISCLOSURE

The present disclosure relates to the technical field of detergent technology, and in particular to a fragrance bead and a preparation method thereof.

### BACKGROUND

The fragrance bead has a fragrance-retaining effect, with components including fragrance and nano microcapsules. The fragrance and nano microcapsules release aromatic factors through friction during laundry or when wearing clothes, imparting a pleasant scent to the garments. Consequently, they are well-received by consumers and have become a new favorite for fragrance enhancement in household cleaning.

In the sales process of fragrance bead, the appearance color plays a role in influencing sales. To meet consumer demands for color appearance, conventional fragrance bead usually adds pigments to provide distinct colors for marketing purposes. However, the color of existing fragrance bead is typically achieved by adding pigments during material melting. Due to the fact that the added pigments can only adhere to the surface of the base material, after the melted material cools into bead shapes the brightness value of bead is generally less than 50%, with a saturation exceeding 70%, resulting in a dark and intense color appearance with a strong plastic feel. In order to improve brightness values and reduce color saturation, the prior art also adds non-melting solid substances during the production process to increase the surface roughness of the particles, thereby decreasing the color saturation of the bead. Nevertheless, this method may introduce new issues such as rough surfaces and powder loss from the bead. Furthermore, during the coloring process, the same dye or pigment may produce variations in brightness and saturation when applied to different base materials, making it necessary to make constant adjustments during each coloring attempt. Consequently, achieving a desired appearance is challenging, resulting in color discrepancies during the production process and difficulties in reaching unified standard and adjusting color.

The Macaron color scheme originates from the colors of Italian desserts, due to the Macaron color scheme has a pinkish hue, low saturation, and high lightness, presenting a soft and sensory effect, thus highly favored by women. The purchasing demographic for fragrance bead mainly comprises females. However, the existing technology lacks fragrance bead with an appearance resembling the Macaron color scheme, failing to meet the heightened aesthetic demands of female consumers. It is evident that there is room for improvement and advancement in the existing technology.

### BRIEF SUMMARY OF THE DISCLOSURE

In view of the shortcomings of the above-mentioned prior art, the purpose of the present disclosure is to provide a fragrance bead and a preparation method thereof, aiming to solve the problem that the appearance of the existing fragrance bead has a plastic texture and no Macaron color appearance.

In order to achieve the above objects, the present disclosure adopts the following technical solutions:
A fragrance bead, and an appearance color of a bead body of the fragrance bead belongs to Macaron color scheme, a saturation of the appearance color is 0%-70%, and a brightness value is 50%-100%.

In the fragrance bead, the bead body of the fragrance bead contains microbubbles, and a volume ratio of the microbubbles in the bead body is 15%-40%.

In the fragrance bead, an effective diameter of the microbubbles is 100 µm to 1000 µm.

In the fragrance bead, the appearance color of the bead body has a saturation of 20%-40%, and a brightness of 70%-100%.

A preparation method A of fragrance bead, the fragrance bead is the fragrance bead as described above, the method includes following steps:
Step A1. Obtaining base material, molding agent, fragrance, gas capture agent, additive A, additive B, and pigment according to a proportion;
Step A2. Heating the base material to a molten state, adding the molding agent while stirring, and stirring to fully mix the molding agent and the molten base material; adding, stirring and mixing the gas capture agent; then adding, stirring and mixing the fragrance and the pigment; adding, stirring and mixing an aqueous solution of the additive A in batches; adding, stirring and mixing an aqueous solution of the additive B in batches, making the additive A and the additive B fully react to obtain a mixture containing microbubbles;
Step A3. Adjusting a temperature of the mixture, granulating, cooling and molding to obtain fragrance bead with a Macaron color effect.

In the preparation method A of the fragrance bead, the base material includes a combination of one or more of ethylene oxide copolymer, propylene oxide copolymer, and ethylene oxide/propylene oxide copolymer.

In the preparation method A of the fragrance bead, the addictive A includes a combination of one or more of alkaline earth metal carbonate, water-soluble alkaline earth metal bicarbonate, water-soluble alkaline earth metal sulfite, and water-soluble alkaline earth metal bisulfite.

In the preparation method A of the fragrance bead, in the step A3, the temperature of the mixture is adjusted to 50-75 °C.

In the preparation method A of the fragrance bead, the gas capture agent is a powder material with a porous structure, having a particle size of 10-1000 nm, and a specific surface area of 1-1000 m2/g.

A preparation method B of fragrance bead, the fragrance bead is the fragrance bead as described above, the method includes following steps:
Step B1. Obtaining base material, molding agent, gas capture agent, fragrance, pigment and antibacterial agent according to a proportion;
Step B2. Heating the base material to a molten state; while stirring, adding the molding agent, the gas capture agent, the fragrance, the antibacterial agent, and the pigment, and stirring evenly to obtain a mixture;
Step B3. Introducing gas into the mixture and stirring evenly to disperse the gas evenly in the mixture;
Step B4. Adjusting a temperature of the mixture to 50-75°C, granulating, and cooling to obtain a Macaron-style fragrance bead.

### Beneficial effects:

The present disclosure provides a fragrance bead and a preparation method thereof. The fragrance bead achieves a Macaron-like appearance by adjusting the saturation of the appearance color to 0%-70% and the brightness value to 50%-100%, presenting a pink and appealing sensory effect to consumers.

The preparation method of the fragrance bead includes preparation method A and preparation method B, that is, introducing microbubbles into the bead through chemical or physical approaches. The microbubbles can adjust the apparent saturation and brightness value of the bead, thereby achieving the goal of creating a Macaron color.

### BRIEF DESCRIPTION OF THE DRAWINGS

Fig. 1 is a physical picture of the fragrance bead provided by the present disclosure (milky white).
Fig. 2 is a physical picture of the fragrance bead provided by the present disclosure (light yellow).
Fig. 3 is a physical picture of the fragrance bead provided by the present disclosure (light pink).

### DETAILED DESCRIPTION OF EMBODIMENTS

The present disclosure provides a fragrance bead and a preparation method thereof. In order to make the purpose, technical solution and effect of the present disclosure clearer, the following embodiments are given to further describe the present disclosure in detail. It should be understood that the embodiments described here are only used to explain the present disclosure and are not intended to limit the present disclosure.

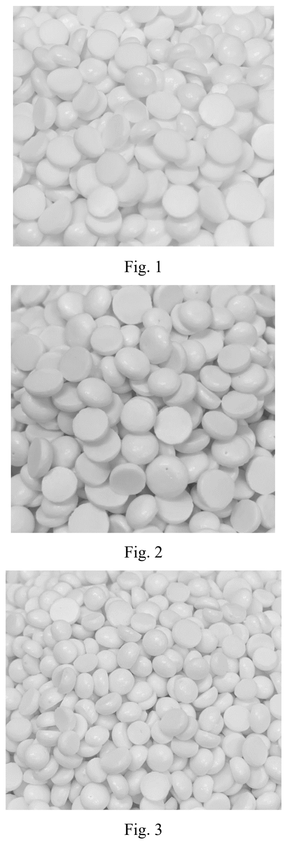

An embodiment of the present disclosure provides a fragrance bead, as shown in Fig. 1, Fig. 2, and Fig. 3. The appearance color of the bead body of the fragrance bead is Macaron color, with lower saturation and higher brightness value. The hue of the fragrance bead with the appearance effect of Macaron color can be any one of red, yellow, and blue; or the superimposing of two of the three primary colors red, yellow, and blue; or the complex color produced by mixing the three primary colors of red, yellow, and blue in different proportions. In order to obtain the target hue, during the production process, the dye or pigment corresponding to the hue can be selected according to actual needs. By dispersing the dye or pigment in the bead, the bead can have the corresponding hue. The saturation of the appearance color of the fragrance bead with Macaron color is low, which is less than or equal to 70%. Since the saturation of the appearance color can reflect the purity of the color, the lower saturation leads to a less pure color. For example, when the saturation of the appearance color of the fragrance bead is less than or equal to 70%, the appearance color appears as if the fragrance bead is covered with a layer of powder, or shows a mixed feeling with pink color, forming a pink appearance, i.e., forming a sensory effect of a "candy color" like a Macaron dessert. The brightness value of the appearance color of the fragrance bead with Macaron color is 50%-100%. Because the brightness value mainly reflects the brightness level of the color, that is, the change in the lightness or darkness of the color or light effect. When the lightness and darkness of the light are consistent, the brightness value is related to the fineness of the surface texture of the bead body. When the surface of the bead body is finer and smoother, the reflection coefficient of the surface becomes greater, and the sensory effect becomes brighter. Therefore, when the surface of the bead body is delicate and having the brightness value of 50%-100%, combining with a lower saturation, a color proportion relationship with a pinkish hue, lower purity, and higher brightness can be formed, ultimately showing an appearance effect of Macaron color.

In one embodiment, the saturation of the fragrance bead with the appearance color effect in Macaron color can be 0%-70%, or 10%-50%, or 20%-40%, or any combination thereof, or any saturation within the ranges. During the implementation process, by combining the hue and the brightness value, the saturation of the fragrance bead is adjusted to bring out a pink appearance and form a color appearance in Macaron color.

As an embodiment, the saturation of the appearance color of the fragrance bead is 20%-40%, which is suitable for forming Macaron colors with light-like hues, such as the Macaron colors with light hues of pink, light red, pink yellow, light yellow, pink green, light green, and milky white, such hues have a more comfortable visual experience and can better attract consumers.

In one embodiment, the brightness value that makes the fragrance bead have an appearance color effect in Macaron color can be 50%-100%, or 60%-100%, or 70%-100%, or any combination thereof, or any brightness value within the ranges. When the hue and saturation are fixed, a higher brightness value results in a more vibrant color, while a lower brightness value leads to a darker color. In the implementation processes, the brightness value can be adjusted based on the hue and saturation to achieve an appearance color that is both soft and comfortable, yet eye-catching, thereby increasing consumer attention.

The fragrance bead, with its macaron-colored appearance, is formed due to the presence of microbubbles in addition to the selection and amount of pigments of different hues. Especially, the regulation of saturation and brightness values in the bead body, i.e., the manifestation of the macaron color effect, is achieved through the adjustment of microbubble content in the bead body. This is because the microbubbles in the bead body further disperse the pigment when the bead body contains the microbubbles, reducing the concentration of pigment on the microbubble's surface, resulting in decreased color purity. Analogous to an inflated balloon, as the balloon expands, the pigment concentration decreases, and the saturation gradually decreases. During the expansion, the surface smoothness increases, leading to an increase in brightness value and ultimately creating a tender pink feeling. Therefore, when dye or pigment content in the fragrance bead is fixed, a volume ratio of the microbubbles in the fragrance bead directly influences the appearance color effect, when the volume ratio of microbubbles increases, a stronger pink feeling is formed.

However, as the volume ratio of microbubbles increases, the hardness of the fragrance bead decreases, and the decrease in hardness of the bead body makes the bead body more susceptible to breakage during collisions, resulting in incomplete or defective bead body and poor appearance. To address this, in one embodiment, the volume ratio of microbubbles in the bead body can be in the range of 5%-75%, or 10%-50%, or 15%-40%, or any combination thereof, or any numerical value within the ranges. When the volume ratio of microbubbles in the bead body falls within these proportions, it achieves an optimal range for the saturation and brightness value of appearance color, presenting a macaron-colored appearance. Simultaneously, it maintains strong bead body hardness, preventing breakage during bottling and transportation, thereby ensuring a favorable external appearance.

In an embodiment, when the volume ratio of microbubbles in the bead body of the fragrance bead is 15%-40%, the appearance color of the bead body shows a lower saturation and a higher brightness value, appearing a Macaron color, and the hardness of the bead body is greater than 5N.

In addition to the volume ratio of microbubbles affecting the appearance color presentation and hardness of the bead body, the effective diameter and dispersion uniformity of microbubbles also impact the appearance color and hardness of the bead body. When the volume ratio of microbubbles is fixed, a smaller effective diameter and higher dispersion uniformity result in a more uniform macaron color on the surface of the bead body, enhancing the appearance color, and providing higher hardness. Conversely, a larger effective diameter and lower dispersion uniformity of microbubbles result in a less uniform macaron color on the surface of the bead body, producing a less appealing appearance color effect, and simultaneously the hardness of the bead body tends to decrease. This is because the smaller the effective diameter of microbubbles, the more uniformly they are dispersed. Additionally, the fine microbubbles are resistant to rupture, preventing the formation of defects on the surface of the bead body. Consequently, the surface texture of the bead body becomes delicate, providing a higher brightness value while reducing saturation, presenting a superior Macaron color. Moreover, due to the resistance of fine microbubbles to rupture, the hardness of the bead body is increased.

In one embodiment, the effective diameter of the microbubbles is 100 nm-5000 µm, or 1 µm-2000 µm, or 100 µm-1000 µm, or any combination thereof, or a microbubble with an effective diameter of any value within the ranges. Microbubbles with the effective diameter can be more uniformly dispersed in the bead body, showing better Macaron color and better hardness.

In an embodiment, the effective diameter of the microbubbles in the bead body of the fragrance bead is 100 µm-1000 µm. Within the range of the effective diameter, the Macaron color appearance on the surface of the bead body is better, and the hardness of the bead body is higher, the breakage rate is smaller during bottling and transportation, and the overall appearance of the bead body is better.

The present disclosure also provides a preparation method A of fragrance bead. The fragrance bead prepared by the preparation method have the appearance effect of Macaron color as mentioned above. That is, the bead body contains microbubbles through a chemical gas generation method, thereby changing the saturation and brightness value of the appearance color of the bead body to form an appearance effect of Macaron color. In the present preparation method, the principle of containing microbubbles in the bead body is: adding additive A and additive B that can generate gas into the material of the fragrance bead, as well as a gas capture agent for capturing gas, so that the generated gas form microbubbles which are evenly dispersed in the molten material. After cooling and solidification, the fragrance bead containing microbubbles are obtained.

In one embodiment, the preparation method A of the fragrance bead includes the following steps:
Step A1. Obtaining raw materials for preparing the fragrance bead according to a proportion. The raw materials include base material, molding agent, fragrance, gas capture agent, additive A, additive B, dye, and pigment. Among them, the additive A can be thermally decomposed to generate gas, or can react chemically with the additive B to generate gas; in addition, in order to facilitate the reaction of additive A and additive B, an appropriate amount of water can also be added to dissolve the additive A and the additive B to form a solution, which facilitates the dispersion and reaction of the additive A and the additive B; furthermore, antibacterial agent or bacteriostatic agent can also be added to the raw material according to the needs of antibacterial effect or sterilization.
Step A2. Heating the base material to a molten state first, adding the molding agent while stirring, and stirring to fully mix the molding agent and the molten base material; then adding, stirring and mixing the gas capture agent; then adding, stirring and mixing the fragrance and pigment (and antibacterial agent or bacteriostatic agent); then slowly adding, stirring and mixing an aqueous solution of the additive A in batches; then slowly adding, stirring and mixing an aqueous solution of the additive B in batches, making the additive A and the additive B fully react to obtain a mixture containing microbubbles.
Step A3. Adjusting a temperature of the mixture, granulating through a granulator, and after cooling and molding, obtaining a fragrance bead with a Macaron color effect.

In the present embodiment, by adding the additive A and the additive B for generating gas and a gas capture agent for capturing gas to form microbubbles in the base material, the prepared fragrance bead contains microbubbles with a higher volume ratio, which makes the appearance color appears to be Macaron color, having better sensory effect, and can better attract consumers.

In the present embodiment, in step A3, the temperature of the mixture directly affects a viscosity of the mixture, thereby affecting the gas content. This is because when the temperature is higher, the viscosity of the mixture will be lower, and when the viscosity is low and the temperature is high, it would be more easily for the gas to escape from the mixture, resulting in a decrease in the gas content, which in turn affects the saturation and the brightness value of the bead appearance. On the contrary, the lower the temperature, the greater the viscosity of the mixture, the more difficult it is for gas to escape, and the gas content increases. However, if the temperature is too low, it is easy to cause uneven gas distribution and the formation of large bubbles, which results in reducing the hardness, increasing the rupture rate of microbubbles, and affecting the appearance effect of the bead body. At the same time, if the temperature is too low, it is easy to form tailing during granulation, which prevents the bead body from forming hemispherical pellet particles and reduces the appearance effect. In this regard, in an embodiment, in step A3, the temperature of the mixture is adjusted to 50-75 °C, or 55-60 °C, or a combination thereof, or any value within the range, which leads to a high gas content in the mixture, a high proportion and good distribution uniformity of the microbubbles in the prepared bead body, and there is no tailing phenomenon during the granulation process, and the formed bead body is regular and smooth.

In an embodiment, in the preparation method A of the fragrance bead, the base material can be a combination of one or more of ethylene oxide copolymer, propylene oxide copolymer, and ethylene oxide/propylene oxide copolymer. The ethylene oxide copolymer, the propylene oxide copolymer, and the ethylene oxide/propylene oxide copolymer have the weight-average molecule weight of 1,500 to 20,000, have good water solubility and molding effect, and can be used as a good carrier for fragrance and other additives.

The molding agent can promote the molding of the material during granulation. In an embodiment, the molding agent has a cationic structure. The molding agent with cationic structure can synergize with clothing fibers to absorb the essence or fragrance microcapsules dissolved in the water, which results in retaining fragrance for a long time.

In an embodiment, the molding agent with cationic structure is selected from the combinations of one or more of polyethylene glycol stearate, plant-based modified ester quaternary ammonium salt, plant-based modified imidazoline quaternary ammonium salt, plant-based modified quaternary ammonium salt, cationic modified starch, and cationic modified cellulose or hemicellulose, which have a better fragrance retention effect. It should be noted that the plant-based modified ester quaternary ammonium salt, the plant-based modified imidazoline quaternary ammonium salt, the plant-based modified quaternary ammonium salt, the cationic modified starch, and the cationic modified cellulose or hemicellulose are all purchased from Daxin Technology Co., Ltd, Nanfeng County.

In an embodiment, in the preparation method A of the fragrance bead, the additive A can be a combination of one or more of water-soluble alkaline earth metal carbonate, water-soluble alkaline earth metal bicarbonate, water-soluble alkaline earth metal sulfite and water-soluble alkaline earth metal bisulfite; the additive B can be inorganic acid or organic acid that is more acidic than carbonic acid and sulfurous acid, wherein the inorganic acid can be silicic acid, metasilicic acid, phosphoric acid or other inorganic acids, the organic acid can be acetic acid, citric acid, and oxalic acid or other organic acids that are more acidic than carbonic acid or sulfurous acid. During the preparation process, the additive A is susceptible to thermal decomposition to generate gas, which facilitates the formation of microbubbles in the bead body; and the added additive B can chemically react with the incompletely decomposed additive A to generate gas, make the additive A fully react to generate more gas.

In order to avoid gas overflow and disperse microbubbles evenly, the added gas capture agent is a powder material with a porous structure. The powder material will not melt during the preparation process and is dispersed in the molten mixture in a solid phase, forming a core of gas accumulation to achieve the function of gas capture. Moreover, by uniformly dispersing the gas capture agent in the molten mixture, that is, uniformly dispersing the gas accumulation core in the molten material, the formed microbubbles can be uniformly dispersed in the molten material, thereby making the appearance of the prepared fragrance bead has lower saturation and higher brightness value, showing a Macaron color.

In an embodiment, the gas capture agent can be a combination of one or more of porous materials such as silicon dioxide, kaolin, bentonite, clay, natural zeolite, molecular sieve, amorphous metal oxide, nano-aluminum oxide, nano-magnetic iron oxide, modified coke powder, modified coal ash, modified coffee grounds, modified cellulose, modified starch, etc.. Because the porous structure and relatively large specific surface areas in these materials, gases can be better gathered during preparation process to be dispersed and retained in the molten mixture in the form of microbubbles. Among them, the modified coke powder, the modified coal ash, the modified coffee grounds, the modified cellulose, and the modified starch are prepared by adopting chemical or biological methods to obtain loose and porous powdery materials with a large specific surface area of coke powder, coal ash, coffee grounds, cellulose and starch, so that these materials can play the role of gas capture.

Due to the particle size and specific surface area of the gas capture agent directly influencing the formation of microbubbles and dispersion uniformity in the bead body, generally speaking, when the amount of gas capture agent is determined, the finer the particle size of the gas capture agent, the better the dispersion in the material, resulting in more uniform microbubbles and a better Macaron color effect on the appearance of the bead body. A larger specific surface area enhances the gas capture capability, leading to a higher volume ratio of microbubbles in the bead body, larger effective diameter of microbubbles, and a better appearance effect. However, when the effective diameter of microbubbles is too large, there is a risk of rupture, causing defects on the surface of the bead body. Therefore, to obtain a fragrance bead with Macaron color and complete appearance, the particle size of the gas capture agent can be in the range of 10-1000 nm, or 10-100 nm, or 10-50 nm, or a combination thereof, or any numerical value within the ranges. The specific surface area of the gas capture agent can be in the ranges of 1-1000 m2/g, or 1-500 m2/g, or 100-300 m2/g, or a combination thereof, or any numerical value within the ranges. Gas capture agent with the particle size range and specific surface area mentioned above exhibits good dispersibility in the mixture, ensuring the uniform dispersion of formed microbubbles in the bead body.

In an embodiment, the gas capture agent has a particle size of 10-50 nm and a specific surface area of 100-300 m2/g, which shows good dispersion uniformity in the molten mixture, and the formed microbubbles dispersed evenly in the bead body, and the effective diameter of the microbubbles fall within the range of 100-1000 µm, leading to a low saturation and high brightness value of the apparent color of the bead body, resulting in a Macaron color and good hardness.

In an embodiment, the raw materials, in parts by weight, for preparing the fragrance bead include: 20-95 parts of base material, 0.1-25 parts of molding agent, 0.01-50 parts of fragrance, 0.001-10 parts of antibacterial agent, 0.001-10 parts of gas capture agent, 0.001-10 parts of additive A, 0.001-10 parts of additive B, 0.0001-10 parts of pigment, 0.01-10 parts of water. The fragrance bead prepared from these raw materials have good fragrance-retaining effect, antibacterial effect, and a Macaron color in appearance color.

The present disclosure also provides another preparation method B of fragrance bead. The fragrance bead prepared by the present preparation method has an appearance effect of Macaron color. The present preparation method involves introducing gas into the molten material and capturing the gas by adding gas capture agent to form microbubbles, thereby achieving the purpose of forming the appearance effect of Macaron color on the surface of the bead body. In one embodiment, the present preparation method includes the following preparation steps:
Step B1. Obtaining base material, molding agent, gas capture agent, fragrance, pigment and antibacterial agent according to a proportion (the antibacterial agent can be optionally added);
Step B2. Adding the base material into the reaction kettle first and heating the base material to a molten state; while stirring, adding the molding agent, the gas capture agent, the fragrance, the antibacterial agent, and the pigment, and stirring evenly to obtain a mixture;
Step B3. Introducing gas into the bottom of the reaction kettle and stirring evenly to disperse the gas evenly in the mixture;
Step B4. Adjusting a temperature of the mixture, granulating, and cooling to obtain a Macaron-style fragrance bead.

In the present embodiment, microbubbles are formed in the bead body of the fragrance bead by introducing gas, so that the apparent color of the bead body of the fragrance bead is Macaron color, thereby better attracting consumers.

In the present embodiment, the base material, the molding agent, the gas capture agent, the fragrance, the antibacterial agent and the pigment are the same as those in the preparation method A of the fragrance bead. To avoid redundancy, they will not be described in detail here. For details, see the preparation method A of the fragrance bead.

In the present embodiment, to better disperse the introduced gas in the mixture, a stirring paddle known as gas-liquid-dispersion stirring paddle is used. The blades of the stirring paddle have a special shape, such as being asymmetric or symmetric parabolic, or having serrations at the blade edges. Through the stirring action of the gas-liquid-dispersion stirring paddle, the introduced gas can be broken down and uniformly dispersed in the molten mixture, forming microbubbles.

In the present embodiment, it should be noted that in step B4, the temperature of the mixture also needs to be controlled so that it has a suitable viscosity to facilitate gas capture and granulation during molding. As an embodiment, in step B4, the temperature of the mixture is adjusted to 50-75 °C, which has better molding effect and gas retention ability.

To further illustrate the fragrance bead provided by the present disclosure and the preparation method thereof, the following embodiments are provided.

### Embodiment 1

A fragrance bead, the appearance color of the bead body is Macaron color, microbubbles are evenly dispersed in the bead body, the volume ratio of the microbubbles in the bead body is 75%, and the effective diameter of the microbubbles is 5000 µm.

In parts by weight, the raw materials for preparing the fragrance bead are composed of the following ingredients: 95 parts of base material, 25 parts of molding agent, 50 parts of fragrance, 10 parts of antibacterial agent, 10 parts of gas capture agent, 10 parts of additive A, 10 parts of additive B, 10 parts of pigment, and 10 parts of water. Among them, the particle size of the gas capture agent is 10 nm, and the specific surface area is 1000 m²/g.

The fragrance bead was prepared through the following steps:
Step A1. Obtaining each raw material according to the proportion;
Step A2. Heating the base material to a molten state first, adding the molding agent while stirring, and stirring to fully mix the molding agent and the molten base material; then adding, stirring and mixing the gas capture agent; then adding, stirring and mixing the fragrance, the pigment, and the antibacterial agent; then slowly adding, stirring and mixing an aqueous solution of additive A in batches; then slowly adding, stirring and mixing an aqueous solution of additive B in batches, making the additive A and the additive B fully react to obtain a mixture containing microbubbles;
Step A3. Adjusting a temperature of the mixture to 75°C, granulating through a granulator, cooling and molding to obtain a fragrance bead with a Macaron color effect.

### Embodiment 2

A fragrance bead, the appearance color of the bead body is Macaron color, microbubbles are evenly dispersed in the bead body, the volume ratio of the microbubbles in the bead body is 5%, and the effective diameter of the microbubbles is 100 nm.

In parts by weight, the raw materials for preparing the fragrance bead are composed of the following ingredients: 20 parts of base material, 0.1 parts of molding agent, 0.01 parts of fragrance, 0.001 parts of antibacterial agent, 0.001 parts of gas capture agent, 0.001 parts of additive A, 0.001 parts of additive B, 0.0001 parts of pigment, and 0.01 parts of water. Among them, the particle size of the gas capture agent is 1000 nm, and the specific surface area is 1 m²/g.

The preparation method of the fragrance bead is basically the same as the method in embodiment 1, except that in step A3, the temperature of the mixture is adjusted to 50 °C.

### Embodiment 3

A fragrance bead, the appearance color of the bead body is Macaron color, microbubbles are evenly dispersed in the bead body, the volume ratio of the microbubbles in the bead body is 10%, and the effective diameter of the microbubbles is 1 µm.

In parts by weight, the raw materials for preparing the fragrance bead are composed of the following ingredients: 60 parts of base material, 10 parts of molding agent, 30 parts of fragrance, 5 parts of antibacterial agent, 5 parts of gas capture agent, 8 parts of additive A, 8 parts of additive B, 5 parts of pigment, and 6 parts of water. Among them, the particle size of the gas capture agent is 20 nm, and the specific surface area is 800 m²/g.

The preparation method of the fragrance bead is basically the same as the method in embodiment 1, except that in step A3, the temperature of the mixture is adjusted to 60 °C.

### Embodiment 4

A fragrance bead, the appearance color of the bead body is Macaron color, microbubbles are evenly dispersed in the bead body, the volume ratio of the microbubbles in the bead body is 50%, and the effective diameter of the microbubbles is 100 µm.

In parts by weight, the raw materials for preparing the fragrance bead are composed of the following ingredients: 55 parts of base material, 20 parts of molding agent, 20 parts of fragrance, 3 parts of antibacterial agent, 8 parts of gas capture agent, 5 parts of additive A, 5 parts of additive B, 7 parts of pigment, and 8 parts of water. Among them, the particle size of the gas capture agent is 100 nm, and the specific surface area is 300 m²/g.

The preparation method of the fragrance bead is basically the same as the method in embodiment 1, except that in step A3, the temperature of the mixture is adjusted to 55 °C.

### Embodiment 5

A fragrance bead, the appearance color of the bead body is Macaron color, microbubbles are evenly dispersed in the bead body, the volume ratio of the microbubbles in the bead body is 10%, and the effective diameter of the microbubbles is 1000 µm.

In parts by weight, the raw materials for preparing the fragrance bead are composed of the following ingredients: 40 parts of base material, 10 parts of molding agent, 10 parts of fragrance, 3 parts of antibacterial agent, 1 parts of gas capture agent, 4 parts of additive A, 4 parts of additive B, 3 parts of pigment, and 2 parts of water. Among them, the particle size of the gas capture agent is 50 nm, and the specific surface area is 500 m²/g.

The preparation method of the fragrance bead is basically the same as the method in embodiment 1, except that in step A3, the temperature of the mixture is adjusted to 65 °C.

### Embodiment 6

A fragrance bead, the appearance color of the bead body is Macaron color, microbubbles are evenly dispersed in the bead body, the volume ratio of the microbubbles in the bead body is 15%, and the effective diameter of the microbubbles is 100 µm.

In parts by weight, the raw materials for preparing the fragrance bead are composed of the following ingredients: 70 parts of base material, 5 parts of molding agent, 20 parts of fragrance, 2 parts of antibacterial agent, 7 parts of gas capture agent, 2 parts of additive A, 3 parts of additive B, 6 parts of pigment, and 3 parts of water. Among them, the particle size of the gas capture agent is 800 nm, and the specific surface area is 300 m²/g.

The preparation method of the fragrance bead is basically the same as the method in embodiment 1, except that in step A3, the temperature of the mixture is adjusted to 62 °C.

### Embodiment 7

A fragrance bead, the appearance color of the bead body is Macaron color, microbubbles are evenly dispersed in the bead body, the volume ratio of the microbubbles in the bead body is 55%, and the effective diameter of the microbubbles is 800 µm.

In parts by weight, the raw materials for preparing the fragrance bead are composed of the following ingredients: 55 parts of base material, 20 parts of molding agent, 20 parts of fragrance, 3 parts of antibacterial agent, 8 parts of gas capture agent, and 7 parts of pigment. Among them, the particle size of the gas capture agent is 50 nm, and the specific surface area is 100 m²/g.

The fragrance bead was prepared through the following steps:
Step B1. Obtaining the base material, the molding agent, the gas capture agent, the fragrance, the pigment and the antibacterial agent according to the proportion;
Step B2. Adding the base material into the reaction kettle first and heating the base material to a molten state; while stirring, adding the molding agent, the gas capture agent, the fragrance, the antibacterial agent, and the pigment, and stirring evenly to obtain a mixture;
Step B3. Introducing gas into the bottom of the reaction kettle and stirring evenly to disperse the gas evenly in the mixture;
Step B4. Adjusting a temperature of the mixture to 50 °C, granulating, and cooling to obtain a Macaron-style fragrance bead.

### Embodiment 8

A fragrance bead, the appearance color of the bead body is Macaron color, microbubbles are evenly dispersed in the bead body, the volume ratio of the microbubbles in the bead body is 70%, and the effective diameter of the microbubbles is 500 µm.

In parts by weight, the raw materials for preparing the fragrance bead are composed of the following ingredients: 80 parts of base material, 10 parts of molding agent, 40 parts of fragrance, 5 parts of antibacterial agent, 8 parts of gas capture agent, and 5 parts of pigment. Among them, the particle size of the gas capture agent is 50 nm, and the specific surface area is 500 m²/g.

The preparation method of the fragrance bead is basically the same as the method of embodiment 7, except that in step B4, the temperature of the mixture is adjusted to 60 °C.

### Embodiment 9

A fragrance bead, the appearance color of the bead body is Macaron color, microbubbles are evenly dispersed in the bead body, the volume ratio of the microbubbles in the bead body is 40%, and the effective diameter of the microbubbles is 100 µm.

In parts by weight, the raw materials for preparing the fragrance bead are composed of the following ingredients: 65 parts of base material, 25 parts of molding agent, 50 parts of fragrance, 2 parts of antibacterial agent, 10 parts of gas capture agent, and 10 parts of pigment. Among them, the particle size of the gas capture agent is 50 nm, and the specific surface area is 500 m²/g.

The preparation method of the fragrance bead is basically the same as the method of embodiment 7, except that in step B4, the temperature of the mixture is adjusted to 65 °C.

### Comparative example 1

A fragrance bead, and in parts by weight, the raw materials for preparing the fragrance bead are composed of the following ingredients: 95 parts of base material, 25 parts of molding agent, 50 parts of fragrance, 10 parts of antibacterial agent, 10 parts of gas capture agent, and 10 parts of pigment. Among them, the particle size of the gas capture agent is 50 nm, and the specific surface area is 500 m²/g.

The fragrance bead was prepared through the following steps:
Step 1. Obtaining each raw material according to the proportion;
Step 2. Heating the base material to a molten state first, adding the molding agent while stirring, and stirring to fully mix the molding agent and the molten base material; then adding, stirring and mixing the gas capture agent; then adding, stirring and mixing the fragrance, the pigment, and the antibacterial agent;
Step 3. Adjusting a temperature of the mixture to 75°C, granulating through a granulator, cooling and molding to obtain the fragrance bead.

### Comparative example 2

A fragrance bead, and in parts by weight, the raw materials for preparing the fragrance bead are composed of the following ingredients: 95 parts of base material, 25 parts of molding agent, 50 parts of fragrance, 10 parts of antibacterial agent, 10 parts of additive A, 10 parts of additive B, 10 parts of gas capture agent, 10 parts of pigment, and 10 parts of water.

The fragrance bead was prepared through the following steps:
Step 1. Obtaining each raw material according to the proportion;
Step 2. Heating the base material to a molten state first, adding the molding agent while stirring, and stirring to fully mix the molding agent and the molten base material; then adding, stirring and mixing the fragrance, the pigment, and the antibacterial agent; then slowly adding, stirring and mixing an aqueous solution of additive A in batches; then slowly adding, stirring and mixing an aqueous solution of additive B in batches, making the additive A and the additive B fully react to obtain a mixture containing microbubbles;
Step 3. Adjusting a temperature of the mixture to 75°C, granulating through a granulator, cooling and molding to obtain the fragrance bead.

### Comparative example 3

A fragrance bead, and in parts by weight, the raw materials for preparing the fragrance bead are composed of the following ingredients: 95 parts of base material, 25 parts of molding agent, 50 parts of fragrance, 10 parts of antibacterial agent, 10 parts of additive A, 10 parts of additive B, 10 parts of gas capture agent, 10 parts of pigment, and 10 parts of water. Among them, the particle size of the gas capture agent is 50 nm, and the specific surface area is 500 m2/g.

The fragrance bead was prepared through the following steps:
Step 1. Obtaining each raw material according to the proportion;
Step 2. Heating the base material to a molten state first, adding the molding agent while stirring, and stirring to fully mix the molding agent and the molten base material; then adding, stirring and mixing the gas capture agent; then adding, stirring and mixing the fragrance, the pigment, and the antibacterial agent; then slowly adding, stirring and mixing an aqueous solution of additive A in batches; then slowly adding, stirring and mixing an aqueous solution of additive B in batches, making the additive A and the additive B fully react to obtain a mixture containing microbubbles;
Step 3. Adjusting a temperature of the mixture to 95°C, granulating through a granulator, cooling and molding to obtain the fragrance bead.

It should be noted that the particle size and specific surface area of the gas capture agent are average values. It should be further explained that the volume ratio of microbubbles is the average value calculated from the same batch of the bead bodies of the fragrance bead, and the effective diameter of the microbubbles is the average value of the microbubbles in the same batch of bead bodies. It should also be noted that in embodiments 1-9 and comparison examples 1-3, the added pigment are the same type of pigment.

The fragrance beads described in embodiments 1-9 and comparative examples 1-3 were tested for appearance saturation, brightness value and hardness. The brightness value was tested using a NR200 horizontal colorimeter, and the saturation was determined by the test using a NR200 horizontal colorimeter and the corresponding value found in the Photoshop palette, the hardness was tested by the YD-1 tablet hardness tester. At the same time, the appearance effect of the fragrance bead was observed. The test results and apparent observation results are as shown in Table 1. It should be noted that the saturation and brightness values are the average values calculated from multiple test results. In addition, the volume ratio of the microbubbles is measured by the volume method; the effective diameter of the microbubbles is calculated according to the average of the diameter of several microbubbles in the cross section of the bead body randomly tested by scanning electron microscopy.

**Table. 1**

| | Microbubbles Ratio/% | Microbubble effective diameter/µm | Saturation/% | Brightness value/% | Hardness/N | Appearance color effect |
|---|---|---|---|---|---|---|
| Embodiment 1 | 75 | 1000 | 0 | 100 | 5 | Macaron color |
| Embodiment 2 | 5 | 0.1 | 70 | 50 | 50 | Macaron color |
| Embodiment 3 | 60 | 400 | 10 | 90 | 13 | Macaron color |
| Embodiment 4 | 50 | 20 | 20 | 70 | 19 | Macaron color |
| Embodiment 5 | 30 | 200 | 40 | 90 | 33 | Macaron color |
| Embodiment 6 | 20 | 20 | 50 | 80 | 37 | Macaron color |
| Embodiment 7 | 55 | 160 | 30 | 80 | 16 | Macaron color |
| Embodiment 8 | 70 | 100 | 20 | 90 | 8 | Macaron color |
| Embodiment 9 | 65 | 20 | 40 | 95 | 12 | Macaron color |
| Comparative example 1 | 2.5 | 0.08 | 88 | 53 | 80 | Ordinary color |
| Comparative example 2 | 0.5 | 1000 | 82 | 44 | 65 | Ordinary color |
| Comparative example 3 | 0 | 0 | 81 | 90 | 55 | Ordinary color |

It can be seen from Table 1 that the saturation of the fragrance beads described in embodiments 1-9 is between 0%-70%, and the brightness value is between 50%-100%. They all show a Macaron color, and have the hardness greater than or equal to 5N, which are easy to package and transport. On the other hand, the fragrance bead described in comparative example 1 and comparative example 3 do not contain microbubbles, which leads to higher saturation and lower brightness value, resulting in an ordinary color of the appearance color. Although comparative example 2 contains microbubbles, because no gas capture agent is added, the microbubbles are unevenly distributed and have a large effective diameter, resulting in the fragrance bead not being able to show a Macaron color.

In summary, for the fragrance bead disclosed in the present disclosure, by adjusting the saturation of the bead body to 0%-70% and the brightness value of 50%-100%, it is possible to obtain Macaron-colored fragrance bead; by adjusting the content of the microbubbles in the bead body, the saturation and the brightness value of the bead body can be adjusted, thereby obtaining fragrant bead with Macaron color.

It is understood that those skilled in the art can make equivalent substitutions or changes based on the technical solutions and inventive concepts of the present disclosure, and all such substitutions or changes should fall within the protection scope of the appended claims of the present disclosure.

## Claims

1. A fragrance bead, wherein an appearance color of a bead body of the fragrance bead belongs to Macaron color scheme, a saturation of the appearance color is 0%-70%, and a brightness value is 50%-100%.

2. The fragrance bead according to claim 1, wherein the bead body of the fragrance bead contains microbubbles, and a volume ratio of the microbubbles in the bead body is 15%-40%.

3. The fragrance bead according to claim 2, wherein an effective diameter of the microbubbles is 100 µm to 1000 µm.

4. The fragrance bead according to claim 1, wherein the appearance color of the bead body has a saturation of 20%-40%, and a brightness of 70%-100%.

5. A preparation method A of the fragrance bead according to any one of claims 1-4, wherein the method comprises steps of:
step A1, obtaining base material, molding agent, fragrance, gas capture agent, additive A, additive B, and pigment according to a proportion;
step A2, heating the base material to a molten state, adding the molding agent while stirring, and stirring to fully mix the molding agent and the molten base material; adding, stirring and mixing the gas capture agent; adding, stirring and mixing the fragrance and the pigment; adding, stirring and mixing an aqueous solution of the additive A in batches; adding, stirring and mixing an aqueous solution of the additive B in batches, making the additive A and the additive B fully react to obtain a mixture containing microbubbles;
step A3, adjusting a temperature of the mixture, granulating, cooling and molding to obtain fragrance bead with a Macaron color effect.

6. The preparation method A of the fragrance bead according to claim 5, wherein the base material is a combination of one or more of ethylene oxide copolymer, propylene oxide copolymer, and ethylene oxide/propylene oxide copolymer.

7. The preparation method A of the fragrance bead according to claim 5, wherein the addictive A is a combination of one or more of alkaline earth metal carbonate, water-soluble alkaline earth metal bicarbonate, water-soluble alkaline earth metal sulfite, and water-soluble alkaline earth metal bisulfite.

8. The preparation method A of the fragrance bead according to claim 5, wherein in the step A3, the temperature of the mixture is adjusted to 50-75 °C.

9. The preparation method A of the fragrance bead according to claim 5, wherein the gas capture agent is a powder material with a porous structure, having a particle size of 10-1000 nm, and a specific surface area of 1-1000 m²/g.

10. A preparation method B of the fragrance bead according to any one of claims 1-4, wherein the method comprises steps of:
step B1, obtaining base material, molding agent, gas capture agent, fragrance, pigment, and antibacterial agent according to a proportion;
step B2, heating the base material to a molten state; while stirring, adding the molding agent, the gas capture agent, the fragrance, the antibacterial agent, and the pigment, and stirring evenly to obtain a mixture;
step B3, introducing gas into the mixture and stirring evenly to disperse the gas evenly in the mixture;
step B4, adjusting a temperature of the mixture to 50-75°C, granulating, and cooling to obtain a Macaron-style fragrance bead.
